# EUROPEAN PATENT APPLICATION

(11) **EP 4 685 292 A1**
(43) Date of publication of application: **28.01.2026**
(21) Application number: 24000095.0
(22) Date of filing: 23.07.2024
(51) Int. Cl.: E01F 8/00, B21D 35/00, B21D 43/02

(54) **SOUND BARRIER MADE OF SOUND-ABSORBING AND SOUND-INSULATING METAL PANELS, TECHNOLOGICAL PROCESS OF MAKING THE PANELS AND TECHNOLOGICAL LINE**

(71) Applicant: UMB Road Solutions Srl, Sat Podu Turcului, com. Podu Turcului (RO)
(72) Inventor: Umbrarescu, Alexandru, Podu Turcului (RO)

(57) **Abstract**

The invention relates to a sound barrier consisting of a plurality of sound-absorbing and sound-insulating panels (P) with lengths between 1000 and 5000 mm, width 500 mm and thickness of approximately 140 mm, arranged and mounted one on top of the other along their length and fixed in the vertical direction by superimposing them between metal posts (S) anchored in the ground, where one panel (P) **consists of** a metal casing (C) made up of two semi-panels (1), with an L-profile, joined together longitudinally by a roll former, semi-panels which may or may not be electrostatically painted and where each panel (P) has a perforated face (2) with a degree of perforation of 30% and opposite this a smooth, non-perforated face (3), between the two faces (2 and 3) are arranged a layer of basaltic mineral wool (4) and over this a layer of glass mineral wool (5), the two layers of mineral wool being fixed by spacers (6), and at the two ends of each panel (P) thus formed are arranged covers (7) of polypropylene.

The manufacturing process of sound-absorbing and sound-insulating metal panels (P) involves the following steps: cold-slitting of metal tape at thicknesses of 0.5 - 2.00 mm, stamping and perforation of steel metal strip, cold-forming of semi-panels, overlapping of the two layers of mineral wool, fixing them with spacers, assembly of panels by embossing, storage.

The technological line for the production of sound-absorbing and sound-insulating metal panels (P) comprises a slitting area (F), a cold forming area (FR) for metal semi-panels, a panel assembly area (AS) and optionally an electrostatic painting plant (V).

## Description

The present invention relates to a sound barrier made of sound-absorbing and sound insulating metal panels, to a technological process for producing sound-absorbing and sound insulating metal panels and to the related technological line.

Sound-absorbing and sound-insulating steel panels with atmospheric corrosion protection are made according to the process, they are recommended to be mounted between hot-rolled steel posts. The installation of these panels provides a sound barrier to protect public or residential areas against noise caused by road or rail traffic. The panels are also intended to limit pedestrian or animal access to the vicinity or to footpaths.

It is known from patent RO 122864 B1 a sound insulating and sound absorbing panel composed of a first vertical laminated element assembled by means of external and internal metal reinforcements, with a second laminated element inclined at an obtuse dihedral angle, and having on a sound absorbing layer made of braided raffia fibers, a metal protective piece being fixed to the ridge of the inclined element.

Another sound insulating and sound absorbing panel is known from document WO2020/201951 A1**,** which has a layered structure consisting of an outer layer with micro-holes, a central layer with honeycomb structure and a second outer layer without holes, the three layers being fixed with adhesive or by thermal bonding.

RO 202200008U2 shows a sound-absorbing and sound-insulating modular panel consisting of several sections made up of a plurality of sound-absorbing and sound-insulating modules fixed between end posts and inner posts fixed on a longitudinal concrete foundation, one module consisting of a front panel made of galvanized steel sheet with a plurality of micro-holes inserted between them, a polyurethane foam insulating sheet being placed behind the front panel.

The problem that the present invention solves is to reduce the noise level caused by road and rail traffic or other sources of noise and to increase the resistance to specific tests related to their working environment.

The sound barrier according to the invention consists of several sound absorbing and sound insulating panels with lengths between 1000 and 5000 mm, width 500 mm or optionally with variable lengths according to design specifications and each having a thickness of approximately 140 mm, which are fixed by vertical superimposition between metal posts anchored in concrete, a panel consisting of a metal casing made of two L-shaped pieces of cold-rolled weathering steel (resistant to atmospheric corrosion) or cold-rolled steel galvanized and painted, cold-formed, longitudinally joined by a jaw joint, each panel having a perforated face with a perforation rate of 30%, a smooth face, between which are arranged a layer of basaltic mineral wool followed by a layer of glass mineral wool, which layers are separated by spacers fitted between the two layers of wool and the stabilization of the panel at both ends being achieved by polypropylene caps, which secure and fix them by elastic folding in the free space of the section of the metal posts.

The manufacturing process of sound absorbing and sound insulating metal panels consists of the following steps: cold rolled steel strip roll forming with thicknesses of 0.6 - 1.00 mm, drilling, cold forming of metal half-panels by profiling, painting of half-panels, where applicable, assembly of panels, which are carried out according to the technological flow described below:
- The slitting area consists of a steel coil feeding carriage, a roll pay-off reel, a pinch and straightening unit, a rotary slitting shear with discs, a side scrap coil winder, strip separation equipment, a stretcher, strip separator arm on the coiler, hydraulic puller carriage for coiler / reel discharge, reel discharge carousel;
- the cold forming area of the metal half-pieces (semi fabricates) is composed of:
   o Semi-finished infeed equipment: hydraulic pay-off reel loading trolley, hydraulic expanding pay-off reel, looper, straightener, press feeder,
   o processing equipment: press with die for sheet metal punching, strip looper, cold forming line - profiling semi-panels, shear for cut to length the semi-panels, o output equipment: roller conveyor for the discharge of semi-panels;

Electrostatic painting (powder coating) is only used for one of the product groups, i.e. sound insulating panels made of cold rolled steel strip or galvanized, which are electrostatically painted before assembly. The painting installation consists of:
o automatic equipment for surface preparation, i.e. degreasing and phosphating, consisting of preparation tunnel, dosing and bath concentration control plant, demineralized water filtration plant;
o semi-panel drying oven, curing oven, semi-panel painting plant, semi-panel transport equipment,

The semi-panel joining machine is equipped upstream with a preparation table, the roll joining equipment and downstream with an exit table where the panel covers are mounted;

The advantages of the sound barrier according to the invention are:
- provides protection against road and rail traffic noise over a wide range of frequencies, with 2 types of mineral wool used instead of just one. The total thickness of the mineral wool layers is approximately 87% of the panel thickness, thus limiting the sound pressure level and providing acoustic comfort in the protected area;
- the panels are made of steel sheet, thereby reducing the carbon footprint by 50% compared to this product;
- each panel is composed of two half-panels, which are joined together by means of a roll former joining unit;
- has a much-improved mechanical strength, avoiding the use of extruded profiles and riveted or bolted joints;
- limit pedestrian or animal access in the vicinity of the roads or on it;
- imitating sound pressure levels and providing acoustic comfort;
- simplified and efficient execution and assembly process;
- provides increased stability after installation;
- replacement of damaged panels is easy, without loss.

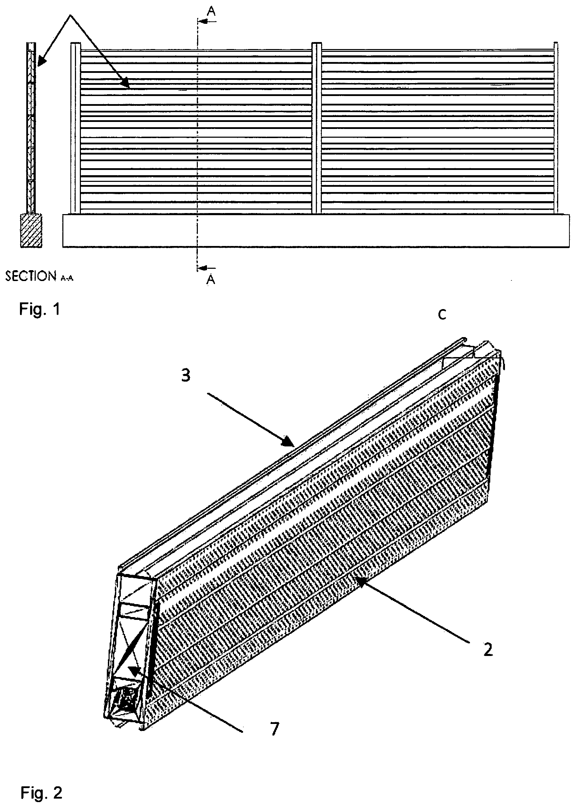

The following is an embodiment of the invention in connection with Fig. 1...13, which represents:
Fig 1 view of sound barrier made of sound absorbing and sound insulating metal panels;
Fig 2 view of sound-absorbing and sound-insulating steel metal panel;
Fig 3 sound-absorbing and sound-insulating steel metal panel composition;
Fig 4 variants of how to fix steel metal posts in the ground;
Fig 5 view of steel metal housing;
Fig 6 schematic view of the components of the cold rolled steel strip slitting area;
Fig 7 cold roll forming area of metal half-plates
Fig 8 sound-absorbing and sound-insulating steel metal panel assembly machine;
Fig 9 electrostatic powder coating painting installation
Fig 10 Steel semi-panel
Fig 11 Spacer.
Fig 12 Side cover
Fig 13. Production flow

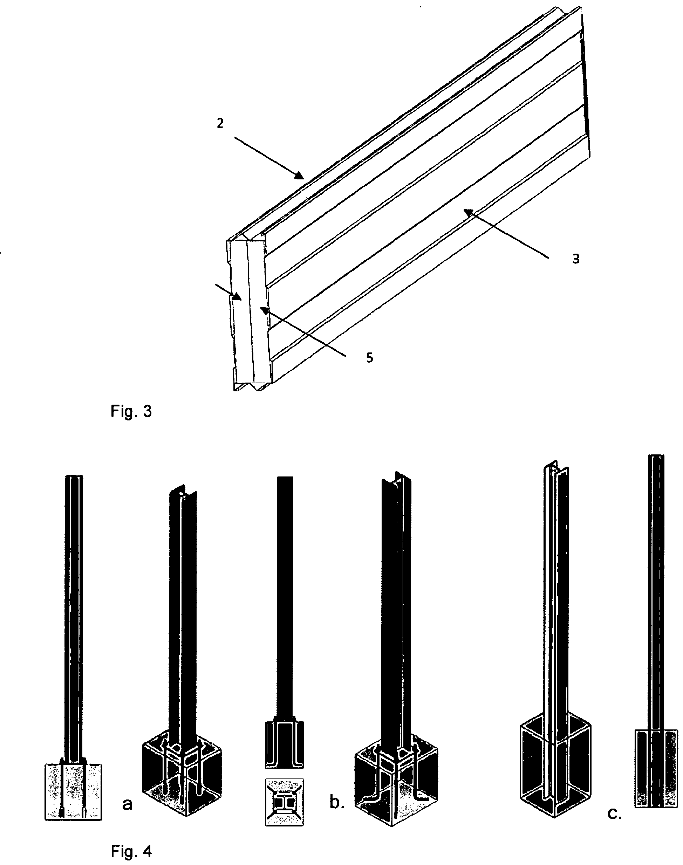

The sound barrier according to the present invention consists of an assembly of sound absorbing and sound insulating **P-panels** with lengths between 1000 and 5000 mm, or optionally with variable lengths according to design specifications, width 500 mm and thickness of about 140 mm. The panels are arranged and mounted one on top of the other along their length and are fixed in the vertical direction by overlapping them between metal **S-pillars** anchored in the ground. The **S-posts are** anchored in the ground by means of anchor rods, by conexpanding anchors or by embedding in concrete, as shown in Fig. 4.

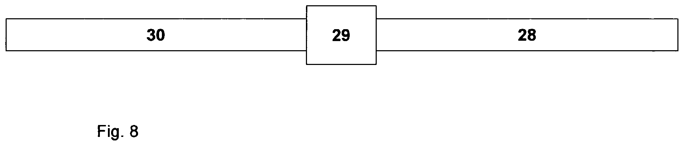

As can be seen from Figs 2 and 3, a panel **P** consists of a metal casing **C** made up of two reinforced L-profile half-panels **1,** shown in Fig. 8, which are joined together longitudinally by means of roll forming seaming. The half-panels **1** may be made either of cold-rolled strip of alloy steel, resistant to atmospheric corrosion, which does not require subsequent painting, or of cold-rolled and continuously zinc-coated steel strip Z100...Z140, which is subsequently painted, one variant being electrostatic painting. In either variant, the material thickness is in the range 0.70 - 1.00 mm. The reinforced L-profile is obtained by cold forming or rolling, resulting in the desired section. The formed half-panels 1 have the same type dimensions.

Housing C has a perforated face **2** with a perforation rate of 30% and opposite this a smooth, non-perforated face **3.** A layer of basaltic mineral wool **4** and a layer of glass mineral wool **5** are superimposed between the two faces **2** and **3.**

The basaltic mineral wool layer **4** has a density of 70 kg/m³, a thickness of 50 mm and corresponds to the perforated face **2,** and the glass mineral wool layer **5** has a thickness of 50 mm and corresponds to the smooth, non-perforated face **3.**

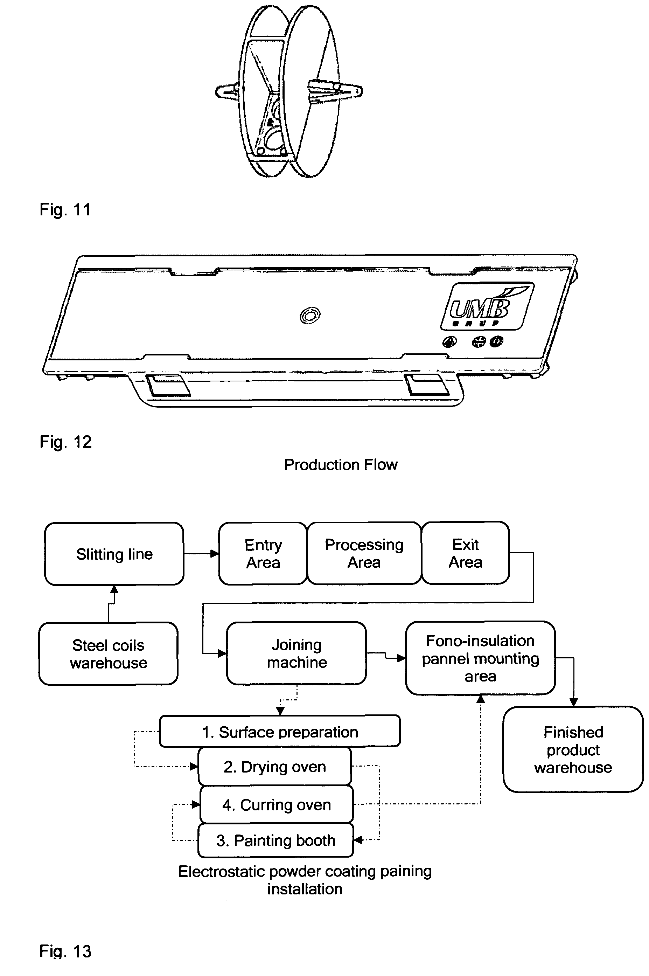

Spacers **6** are provided between the two layers of wool, mounted to support and position the two layers of mineral wool in a fixed position. The spacers **6,** as shown in Fig. 11, have a specific shape creating a distance of 14 mm between the layers of wool and have sharp **p spurs** facing in opposite directions, the total height of a spacer being 66 mm.

The space between the two layers of mineral wool created by the **6** spacers can be considered a third layer of noise protection.

At the two ends of each formed **P-panel,** polypropylene side covers **7** are arranged to stabilize the panel and allow it to be fixed by elastic folding in the free space of the section of the metal S-pillars. The side covers **7** protect the 130,5 mm thick panel and the layers of wool inside it and also act as a seal for absorbing vibrations between a **P-panel** and the **S-pillars.**

The side edges of the **P-panels** are profiled in such a way that they can only be joined by overlapping vertically between the wings of the **S-pillars,** without any other fasteners.

The service life of noise barriers is between 10 and 25 years in urban or industrial atmospheres with moderate Sulphur dioxide pollution.

Galvanized steel columns have a minimum of 85 pm of thermally deposited zinc coating.

The fixing method of the sound-absorbing and sound-insulating **P panels** allows easy replacement in case of accidental degradation or if the service life is exceeded.

The climatic conditions in which these panels work optimally are: outdoor air temperature between -40° C and +80° C, indoor air relative humidity up to 100%, wind speed up to 40m/s, wind load 19 KN/m.

The panels show surfaces subject to contact with water, exposed to splashing water containing chlorides, urban atmospheres or industrial atmospheres with moderate pollution.

The manufacturing process of sound-absorbing and sound-insulating metal panels **P** consists of the following steps: cold metal strip slitting at thicknesses of 0.5 - 2.00 mm, cold forming of metal half-panels where one side of the half-panel is drilled, profiling, followed by assembly of the half-panels by facing.

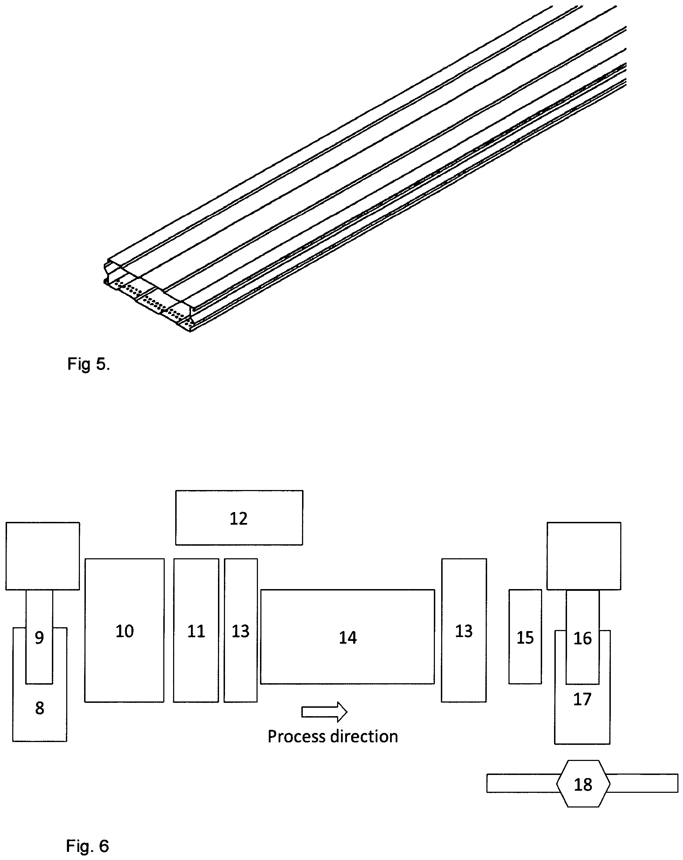

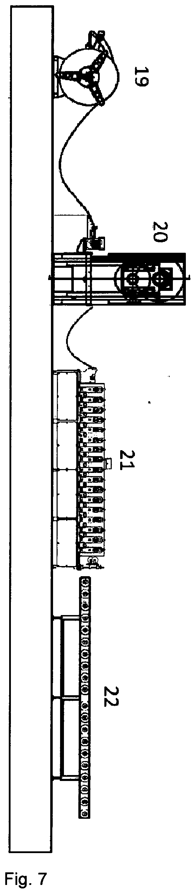

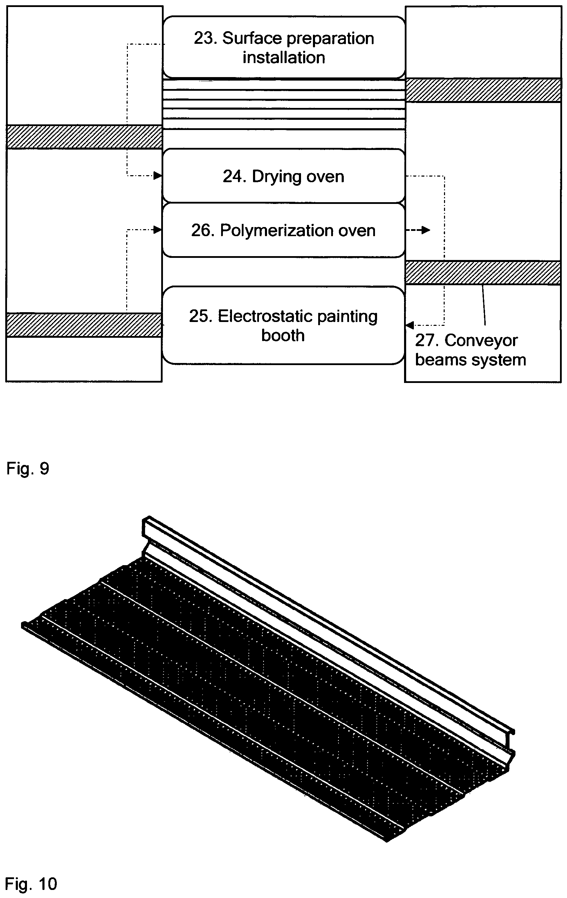

These steps are carried out by specific areas, i.e. by:
- The slitting area **F,** see fig 6, consists of a feed carriage **8** with rollers, pay-off-reel **9,** pinch and straightening unit **10,** slitting shears **11** with discs, side scrap **12** coiler, strip separator **13** and stretcher, strip looper **14,** strip separator arm **15,** coiler **16,** exit coil carriage **17** for coiler discharge, coiler carousel **18;**
- cold **FR** forming area for metal semi-panels, fig 7, consisting of a hydraulic pay-of reel loading trolley, hydraulic pay off reel **19,** strip straightener, press feeder, press **20** with sheet metal stamping die, strip looper;
- forming area - **FP** roll profiling for semi-panels **21** and shear for cutting to length the semi-panels, roller conveyor **22** for evacuating half-panels;
- the electrostatic powder coating painting installation **IV** , fig 9, which involves a surface preparation installation **23** for degreasing and surface treatment, includes a demineralized water bath control and regulation installation, semi-panels drying oven **24,** semi-panels curing oven **26,** semi-panels painting installation **25,** semi-panels transport equipment **27,**
- assembly area **AS,** fig 10 equipped upstream with a preparation conveyor table **28,** roll joining station **29** and downstream with an evacuation table **30** where the panel covers **7** are also mounted.

### Technology flow

Cold rolled or galvanized strip rolls after being received and stored according to their width, are to be prepared for slitting to the required dimensions. Cold or galvanized steel strip coils are slit to the required width on the slitting equipment. The resulting narrow coils are the raw material for the next manufacturing process on the L roll forming line.

Depending on the type of semi-panel to be processed, the steel coil is positioned on the hydraulic pay-off reel loading carriage and the processing/fabrication of the unpainted semi-panels begins, After the process semi-panels are then stored in specially arranged areas for joining.

The next step is to insert the semi-panels in the joining machine to form the metal housing C of the sound-absorbing and sound-insulating panels.

Depending on the material used, the next step in the process may consist of placing the galvanized strip panels in the electrostatic powder coating painting installation, the first operation being surface treatment followed by drying, electrostatic painting and polymerization.

The painted panels are then received and transferred for mounting mineral wool, side covers, finally packed and palletized.

In the case of sound-absorbing and sound-insulating panels with a metal structure made of cold-rolled strip resistant to atmospheric corrosion, the mineral wool layers are filled in before the joining operation to form the C-type casing; after joining they are transferred to the area for fitting covers and pallets.

## Claims

1. Sound barrier according to the invention consisting of several sound-absorbing and sound-insulating panels **(P)** mounted between end posts **(5), characterized in that** it consists of several sound-absorbing and sound-insulating panels **(P)** with lengths between 1000 and 5000 mm, 500 mm wide and approximately 140 mm thick, arranged and mounted one on top of the other along their length and fixed in the vertical direction by superimposing them between metal posts **(S)** anchored in the ground, wherein one panel **(P)** consists of a metal casing **(C)** formed of two half-panels **(1),** with an L-profile, which are joined longitudinally by means of a jaw, which half-panels may or may not be electrostatically painted, and where each panel **(P)** has a perforated face **(2)** with a perforation rate of 30 % and opposite this a smooth, non-perforated face **(3)** between the two faces **(2), 3)** are arranged a layer of basaltic mineral wool **(4)** and over this a layer of glass mineral wool **(5),** the two layers of mineral wool being fixed with spacers **(6),** at the two ends of each panel **(P)** thus formed being arranged covers **(7)** of polypropylene.

2. Sound barrier according to claim 1, **characterized in that** the half-panels **(1)** are made of cold-rolled and zinc-dip galvanized steel, continuously zinc-coated Z100...Z140, with a layer thickness of 0.8 mm.

3. Sound barrier according to claim 1, **characterized in that** the basaltic mineral wool layer **(4),** has a density of 70 kg/m³, a thickness of 50 mm and corresponds to the perforated face **(2),** and the glass mineral wool layer **(5),** has a thickness of 50 mm and corresponds to the smooth, non-perforated face **(3).**

4. Sound barrier according to claim 1, **characterized in that** the spacers **6,** create a distance of 14 mm between the mineral wool layers and have spurs **(p)** which are sharp and oriented in opposite directions.

5. Sound barrier according to claim 1 **characterized in that** the covers **(7)** protect the 130.5 mm thick panel and the layers of fleece inside it and also act as a seal for absorbing vibrations between the panels **(P).**

6. Sound barrier as claimed in claim 1, **characterized in that** the side edges of the panels **(P)** are profiled in such a way that they can only be joined by overlapping vertically between the wings of the posts **(S)** without any other fastening parts.

7. The manufacturing process of sound-absorbing and sound-insulating metal panels **P is characterized by the fact that it** involves the following stages: cold-slitting of metal strip at thicknesses of 0.5 - 2.00 mm, stamping and perforation of metal semi-panels, cold forming of metal semi-panels, overlapping of the two layers of mineral wool, fixing them with spacers, assembly of panels by roll forming seaming, storage.

8. Technological line for the production of sound-absorbing and sound-insulating metal panels **P, characterized in that it** comprises a slitting area **(F),** a cold roll forming area **(FR)** for steel semi-panels, a panel assembly area **(AS)** and optionally an electrostatic painting plant **(V).**

9. Technological line for producing sound-absorbing and sound-insulating metal panels according to claim 8, **characterized in that** the slitting area **(F)** consists of a feed carriage **(8)** with rolls , a roll pay-off reel **(9),** pinch and straightening unit **(10)** metal material, a slitting shear **(11)** with discs, side scrap **12** coiler, a strip separator **(13)** and stretcher, a strip looper **(14),** strip separator arm **15,** coiler **16,** hydraulic exit coil carriage **17** for reel coiler discharge

10. Technological line for producing sound-absorbing and sound-insulating metal panels according to claim 8, **characterized in that the** cold forming **(FR)** area of the metal semi-panels comprises a hydraulic loading carriage and hydraulically expanding pay-off reel **(19),** a strip stretcher, a press feeder and press **(20)** with die for stamping and perforating sheet metal, a strip stretcher, a cold forming line **(FP)** for half-panels, with cut to length shear **(20)** for cutting half-panels and a roller conveyor **(21)** for discharging half-panels;

11. Technological line for the production of sound-absorbing and sound-insulating metal panels according to claim 8, **characterized in that it** comprises an electrostatic powder coating painting installation **(IV) comprising** surface preparation equipment **(23)** for degreasing and phosphating, a semi-panel drying oven **(24),** a curing oven **(26),** the semi-panel painting installation **(25)** and semi-panel transport equipment **(27)**.

12. Technological line for producing sound-absorbing and sound-insulating metal panels according to claim 8, **characterized in that the** assembly area **(AS)** consists of a semi-panel joining machine **(30)** equipped upstream with a preparation table **(28)** and downstream with a discharge table **(29)** where the panel covers **(7)** are also mounted.
